# FASCICULE DE BREVET EUROPEEN

(11) **EP 2 475 909 B1**
(45) Date de publication et mention de la délivrance du brevet: **23.10.2013**
(21) Numéro de dépôt: 10768991.1
(22) Date de dépôt: 07.09.2010
(51) Int. Cl.: F16F 15/30, B64G 1/22

(54) **DISPOSITIF AMORTISSEUR**
STOSSDÄMPFER
SHOCK-ABSORBER DEVICE

(30) Priorité: 10.09.2009 FR 0956180; 20.10.2009 FR 0957338
(43) Date de publication de la demande: 18.07.2012
(73) Titulaire: Conseil et Technique, 31650 Lauzerville (FR)
(72) Inventeur: VALEMBOIS, Guy, F-31650 Lauzerville (FR)
(74) Mandataire: Rhein, Alain
(86) Numéro de dépôt international: PCT/FR2010/051863
(87) Numéro de publication internationale: WO 2011/030054

(56) Documents cités:
- EP-A2- 0 047 694
- EP-A2- 0 796 785

## Description

La présente invention concerne le domaine du contrôle de mouvement en particulier la maîtrise des chocs lors de la mise en oeuvre de dispositif mécanique, et a pour objet un dispositif d'amortisseur.

Le dispositif amortisseur selon l'invention trouve des applications dans de nombreux domaines tels que, non limitativement, le déploiement d'appendices de satellite générateurs solaire, antenne, mât, le verrouillage de pièce d'armement, l'amortissement de fin de course pour un dispositif d'ouverture et de fermeture de porte d'avion.

Ces domaines nécessitent la maîtrise de la dynamique d'un mouvement, tout en rendant très compliqué ou coûteux l'usage des amortisseurs utilisant des fluides.

La présente invention trouvera des applications multiples pour des utilisations dans des plages de températures, froides ou chaudes, inappropriées à l'utilisation de fluides, et également lorsque la durée de stockage de tels amortisseurs est limitée dans le temps, notamment les joints d'étanchéité dont la tenue dans le temps est relativement courte.

Dans le domaine particulier des satellites, les générateurs solaires sont des panneaux rectangulaires stockés en position repliée sur les faces latérales du satellite pour le lancement et qui sont destinés à déployés lorsque le satellite a atteint son orbite. Les panneaux sont articulés entre eux par des liaisons pivots motorisées par des ressorts. L'amplitude des mouvements est limitée par des butées mécaniques qui permettrent de définir la géométrie déployée. Lors de ce déploiement, l'énergie potentielle accumulée dans les ressorts se transforme en énergie cinétique dans les panneaux. La fin du mouvement se fait donc avec une vitesse d'impact sur les butées ce qui induit des rebonds sur celles-ci, des chocs mécaniques importants pouvant générer des ruptures, des perturbations dans l'orientation même du satellite.

Pour limiter les effets de choc il serait envisageable de réduire la force des ressorts, mais cela n'est pas compatible avec la sécurité nécessaire au déploiement des panneaux qui demande une grande marge de fonctionnement.

Une autre solution consiste à motoriser tous les mouvements, avec pour inconvénient une forte augmentation du poids de l'ensemble ce qui est rédhibitoire dans le domaine spatial.

Le document EP 0047694 présente un dispositif régulateur pour mécanisme spatial selon le préambule de la revendication 1.

La présente invention a pour but de remédier à tous ces inconvénients en proposant un dispositif amortisseur permettant de réduire considérablement les problèmes de chocs, tout en étant susceptible d'assurer de plus une fonction de verrouillage.

Le dispositif amortisseur selon l'invention est destiné à relier deux pièces dont l'une est susceptible, sous l'effet unique d'une poussée initiale temporaire, donnée par un moyen moteur, de se mouvoir par rapport à l'autre pour passer d'une position initiale à une position terminale, et il se caractérise essentiellement en ce qu'il comporte un système mécanique reliant lesdites pièces en mouvement relatif, et qui incorpore un accumulateur d'énergie cinétique conçu apte à être alimenté par ladite poussée initiale, et à restituer au moins l'énergie juste nécessaire pour permettre à ladite pièce mobile d'atteindre ladite position terminale.

Selon une caractéristique additionnelle du dispositif amortisseur selon l'invention, le mouvement relatif consiste en un mouvement de pivotement d'une pièce sur l'autre, et le système mécanique comprend d'une part une roue dentée coaxiale à l'axe dudit pivotement, et solidaire fixement de la pièce mobile et conçue apte à être entraînée en rotation lors de la poussée initiale, et d'autre part un volant à inertie, qui constitue l'accumulateur cinétique, et qui est lié en rotation, directement ou indirectement, à ladite roue dentée.

Selon une autre caractéristique additionnelle du dispositif amortisseur selon l'invention, le système mécanique comporte, intercalé en la roue dentée et le volant à inertie, un multiplicateur de vitesse à un ou plusieurs étages.

Selon une autre caractéristique additionnelle du dispositif amortisseur selon l'invention, le système mécanique comporte, une roue libre.

Selon une autre caractéristique additionnelle du dispositif amortisseur selon l'invention, le système mécanique comporte un cliquet conçu apte à coopérer avec une roue dentée, afin d'assurer une fonction de verrouillage.

Selon une autre caractéristique additionnelle du dispositif amortisseur selon l'invention, le système mécanique comporte au moins au niveau d'une liaison entre un arbre et une roue dentée, un élément présentant des caractéristiques d'élasticité susceptible, en coopération avec le cliquet, d'assurer un verrouillage avec précontrainte.

Selon une autre caractéristique additionnelle du dispositif amortisseur selon l'invention, le système mécanique comporte un moyen limiteur de couple disposé au niveau du volant à inertie.

Selon une autre caractéristique additionnelle du dispositif amortisseur selon l'invention, le volant d'inertie est de diamètre variable, il comporte à cet effet un moyeu et au moins une masselotte mobile radialement, lesquels sont reliés au travers de moyens de liaison présentant des facultés d'allongement et associés à des moyens élastiques de rappel centripète.

Selon une autre caractéristique additionnelle du dispositif amortisseur selon l'invention, le volant d'inertie de diamètre variable est disposé concentriquement dans un élément tubulaire solidaire de la pièce qui porte ledit volant d'inertie, et dont le diamètre interne correspond à celui atteint par ledit volant d'inertie à une certaine vitesse de rotation, en sorte qu'au delà de cette vitesse la masselotte, ou les masselottes, dudit volant d'inertie vienne frotter contre la paroi interne dudit élément tubulaire, en vue de réaliser un freinage.

Selon une autre caractéristique additionnelle du dispositif amortisseur selon l'invention, il comporte plusieurs volants d'inertie susceptibles d'être utilisés dans des sens de rotation inverses, en étant montés sur des roues libres de manière à n'être actifs que dans un sens de rotation, et en sorte d'obtenir des réponses différentes en fonction du sens de rotation transmis.

Les avantages et les caractéristiques du dispositif amortisseur selon l'invention, ressortiront plus clairement de la description qui suit et qui se rapporte au dessin annexé, lequel en représente un mode de réalisation non limitatif.

Dans le dessin annexé :
- la figure 1 représente une vue schématique en perspective d'un ensemble mécanique équipé d'un dispositif amortisseur selon l'invention.
- les figures 2a, 2b, 2c et 2d représentent des vues schématiques en élévation du même ensemble mécanique comprenant le même dispositif amortisseur dans phases différentes,
- les figures 3a et 3b représentent des vues schématiques en élévation du même ensemble mécanique comprenant le même dispositif amortisseur dans deux phases différentes.
- la figure 4 représente une vue schématique en perspective d'une partie du même ensemble mécanique comprenant une variante du dispositif amortisseur selon l'invention.
- la figure 5 représente une vue schématique en perspective d'une variante de réalisation du dispositif amortisseur selon l'invention.
- la figure 6 représente une vue schématique en perspective d'une pièce de la variante de la figure 5.
- la figure 7 représente une vue schématique en perspective d'un autre mode de réalisation de la pièce représentée à la figure 6.

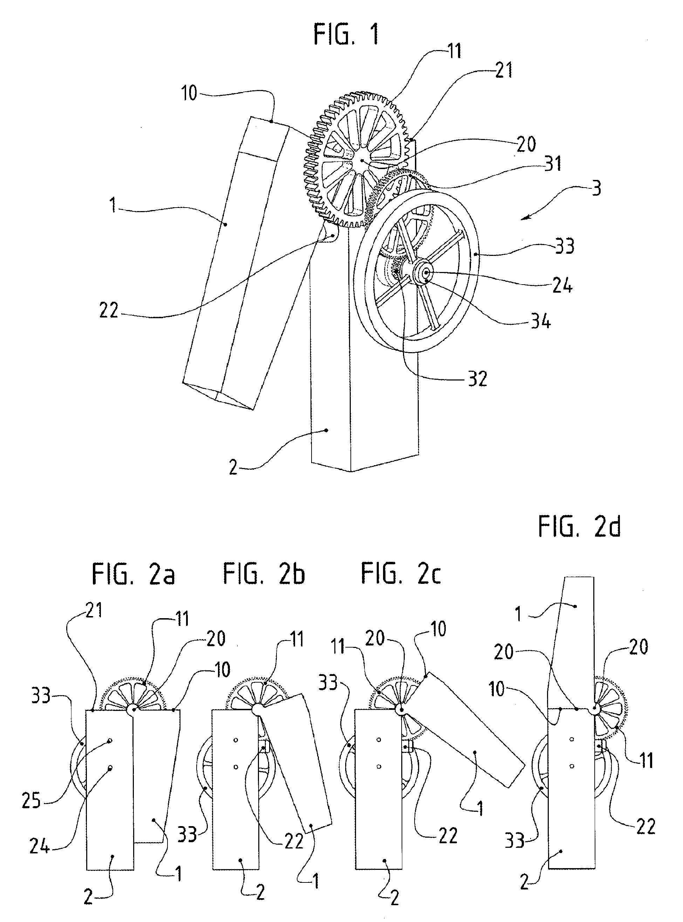

Dans les dessins annexés, le dispositif amortisseur selon l'invention est utilisé, non limitativement, dans une application particulière à savoir le pivotement d'une pièce 1 sur une pièce 2 au travers d'une liaison pivot 20, et plus particulièrement le déploiement de la pièce 1 par rapport à la pièce 2, pour passer d'une position initiale où elle est repliée contre la pièce 2 comme cela est représenté sur la figure 2a, à une position terminale où elle se trouve dans le prolongement de la pièce 2, aboutée à la face extrême 21 de cette dernière, par sa face extrême 10, comme cela est représenté sur la figure 2d.

Le passage de la position initiale à la position terminale est obtenu sous l'effet d'une poussée qui en l'occurrence consiste ici, non limitativement, en une impulsion obtenue par un poussoir à ressort 22 dont la course est volontairement limitée. Lorsque la pièce 1 est en position de stockage le poussoir à ressort 22 est en position rentrée, position dans laquelle il accumule une certaine énergie potentielle.

On notera que le mouvement peut être initié par d'autres moyens, l'impulsion pouvant être remplacée par une longue poussée par exemple.

Dans ce mode de réalisation, le dispositif amortisseur 3 selon l'invention comporte une roue dentée 11 coaxiale à l'axe de la liaison pivot 20, calée en rotation sur la pièce 1, et engrenée sur un pignon 30 calé coaxialement en rotation sur une grande roue dentée 31, elle-même engrenée sur un pignon 32 calé coaxialement en rotation sur un volant d'inertie 33. L'ensemble pignon 30 et roue dentée 31 est monté sur un arbre 23 porté par la pièce 2, tandis que l'ensemble pignon 32 et volant d'inertie 33 est monté sur un arbre 24 également porté par la pièce 2.

L'ensemble pignon 30 et roue dentée 31, intercalé entre la roue dentée 11 et le volant d'inertie 33, constitue un multiplicateur de vitesse.

Le principe de fonctionnement de la présente invention est le suivant. Lorsque le poussoir à ressort 22 est libéré, il repousse la pièce 1, avec pour conséquence l'entraînement en pivotement de roue dentée 11 et, via le train d'engrenages, le volant d'inertie 33. L'énergie potentielle libérée par le poussoir à ressort 22 se répartie en énergie cinétique dans chacune des pièces en mouvement au prorata de leur inertie, ce qui a pour effet de limiter la dynamique du mouvement de la pièce 1.

L'énergie cinétique du volant d'inertie 33 sera selon le cas, utilisable pour motoriser si nécessaire la pièce 1, dans le cas par exemple d'un ralentissement du mouvement principal dû aux frottements, utilisable pour réaliser une fonction de verrouillage comme cela sera vu plus loin, absorbée par un ralentissement lent de la pièce 1.

Ce dispositif n'est efficace que si l'inertie du volant d'inertie 33 est significative, ce qui implique qu'elle doit être lourde. Aussi, le multiplicateur de vitesse que constitue l'ensemble pignon 30 et roue dentée 31, permet d'augmenter l'inertie du volant d'inertie 33 sans avoir à augmenter la masse de celui-ci. Par ce choix constructif on peut obtenir des inerties significatives tout en conservant des masses faibles pour le volant d'inertie. On notera qu'il est possible d'intégrer d'autres étages de multiplication.

De plus, de manière avantageuse, une roue libre 34 est disposée sur l'un des arbres, en l'occurrence sur l'arbre 24, intercalée entre ce dernier le volant d'inertie 33, pour permettre le mouvement relatif entre l'arbre 24 et le volant d'inertie 33 dans un seul sens. Le rôle de cette roue libre est de permettre la transmission du mouvement initial pendant la phase d'accélération, de permettre le mouvement libre de la pièce secondaire lors de l'arrêt de la pièce à mouvoir et ainsi éviter un choc important car une partie significative de l'énergie cinétique sera déviée dans le mouvement libre du volant d'inertie 33.

Le dispositif amortisseur 3 selon l'invention permet la maîtrise du mouvement sans fonction de dissipation directe, à savoir l'utilisation de frottement sec ou visqueux toujours source de grippage potentiel ou de fluctuation de fonctionnement dans des ambiances thermiques variables. Sa mise en oeuvre se fait avec des fonctions élémentaires toutes déjà validées dans le domaine spatial. Il est insensible à l'ambiance thermique.

Le concept permet de diminuer la rapidité du mouvement de déploiement en augmentant artificiellement et temporairement l'inertie des pièces. En ne jouant que sur cet apport inertiel il n'y a pas lieu d'augmenter la motorisation du mouvement ce qui n'altère pas les marges de motorisation.

L'intérêt du dispositif est de permettre de dimensionner correctement et avec beaucoup de marge la fonction ressort nécessaire au déploiement tout en limitant la dynamique du mouvement et ainsi en réduisant considérablement le chocs de mise en butée de la pièce 1. La vitesse d'impact est considérablement réduite par l'augmentation artificielle de l'inertie limitée à la phase active du mouvement.

On notera que l'énergie nécessairement absorbée par le choc de mise en butée correspond à une fraction de l'énergie potentielle initiale. Ce rapport d'énergie, traduit directement l'effet amortisseur, car sans le dispositif, l'intégralité de l'énergie potentielle nécessaire à la motorisation du mouvement se retrouve dans le choc de mise en butée.

La marge de motorisation est le rapport entre l'énergie disponible dans le système, ici l'énergie potentielle accumulée dans le poussoir à ressort 22, et l'énergie juste nécessaire à la mise en oeuvre du mouvement complet, généralement nécessaire à lutter contre les frottements dans le mécanisme et nécessaire au verrouillage. Dans le domaine particulier de l'industrie spatiale, on impose des marges de motorisation de deux à trois, ce qui induit une énergie à dissiper de une à deux fois l'énergie juste nécessaire à la mise en oeuvre du mouvement. Dans le mode de réalisation proposé il est possible d'utiliser judicieusement l'énergie cinétique disponible dans le mouvement libre du volant d'inertie 33 pour augmenter la marge de motorisation.

En effet la rotation relative de la roue libre 34 se fait avec un couple de frottement résistant résiduel, et en cas de ralentissement du mouvement dû à toutes résistances externes ou internes, le dernier arbre du multiplicateur décélère ce qui provoque un mouvement relatif entre ce dernier arbre de multiplicateur et le volant d'inertie 33 qui a tendance à poursuivre son mouvement libre. Le couple de frottement résistant apparaît et il a deux effets, d'une part il provoque le ralentissement progressif du volant d'inertie, et d'autre part il est multiplié par le rapport de multiplication.

Aussi, un dimensionnement judicieux peut donc permettre, en optimisant cette fonction, de transférer une grande partie de l'énergie cinétique du volant d'inertie 33 en énergie de motorisation, ne s'appliquant que si cela est strictement nécessaire, c'est-à-dire en cas de décélération de la pièce 1. A cet effet il est judicieux de prédéfinir un couple de résistance adéquat de la roue libre 34.

Il est possible de combiner les deux fonctions de limitation de l'énergie du choc de mise en butée et d'augmentation de la marge de motorisation, par le transfert judicieux de l'énergie disponible dans le volant d'inertie 33.

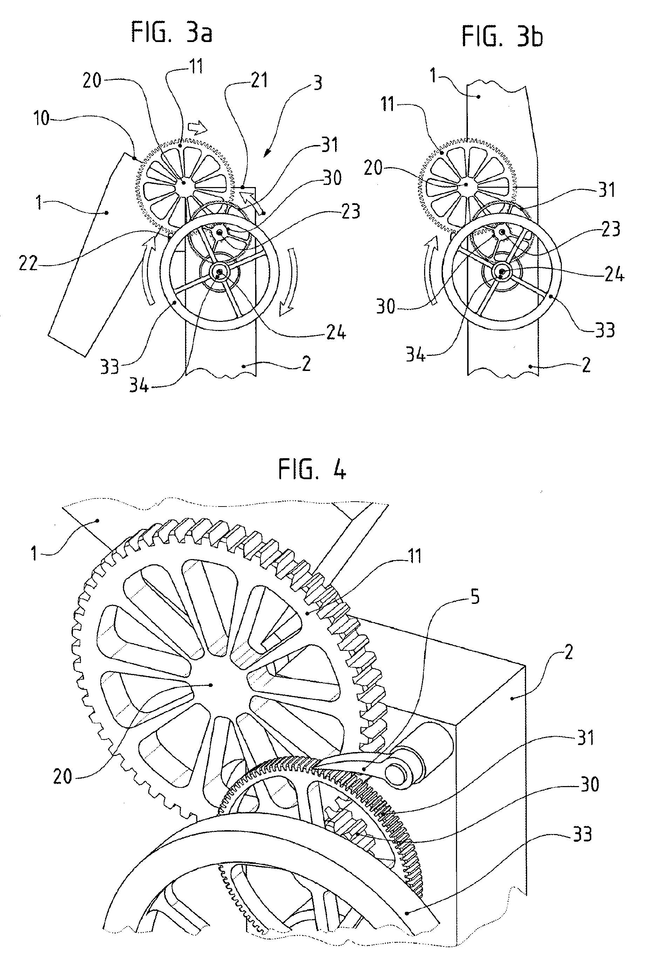

De manière avantageuse, comme cela est représenté sur la figure 4, il est aussi possible de prévoir un prélèvement de l'énergie cinétique disponible dans le mouvement libre du volant d'inertie 33 pour prévoir le verrouillage des pièces 1 et 2 déployées, et même une précontrainte souvent nécessaire pour des questions de rigidité. L'énergie nécessaire au verrouillage ou à la mise en précontrainte sera prélevée sur l'énergie cinétique du volant d'inertie de la même manière.

Sur cette figure on peut voir que le dispositif amortisseur 3 selon l'invention comporte un cliquet 5, coopérant avec la roue dentée 31, ce cliquet 5 permet de laisser libre le mouvement de déploiement tout en bloquant le mouvement inverse.

A la mise en butée, la poursuite de la rotation libre du volant d'inertie 33 provoque la naissance du couple de résistance au mouvement relatif dans la roue libre qui se retrouve multiplié par le coefficient de multiplication sur l'arbre de la liaison pivot 20.

Il suffit de donner une élasticité quelconque dans le système, par exemple souplesse d'arbre intermédiaire en torsion, souplesse du point de mise en butée, etc...., pour que cette élasticité conjuguée de l'irréversibilité due au cliquet 5 permette la précontrainte.

On notera par ailleurs qu'il est possible de prévoir, un limiteur de couple, qui peut être automatique ou commandé, et qui peut aisément être disposé au niveau du volant à inertie 33.

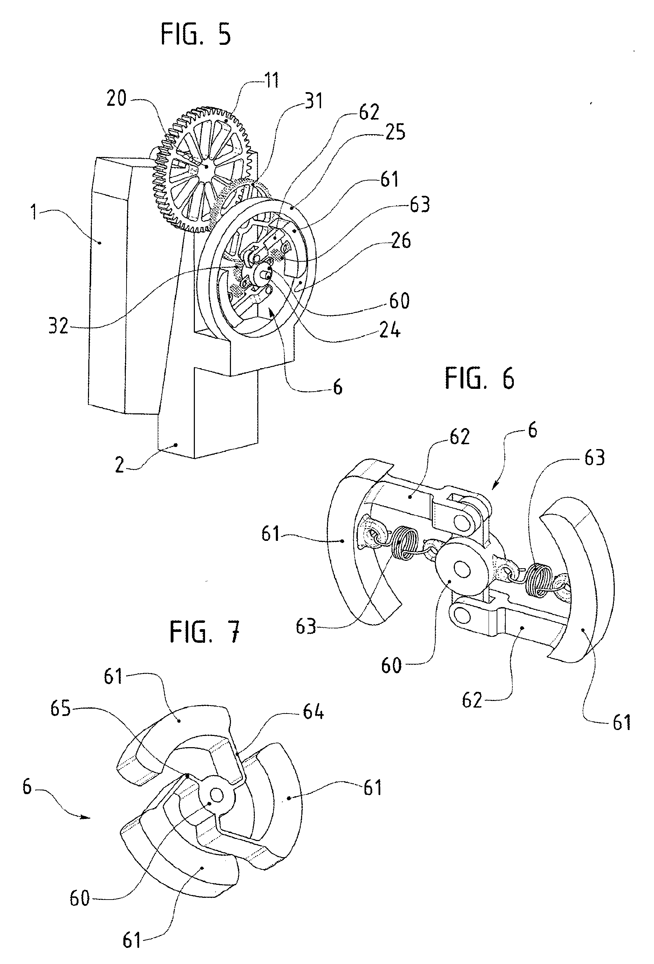

En référence maintenant à la figure 5, on peut voir une variante du dispositif amortisseur selon l'invention, et qui diffère des modes de réalisations décrits ci-dessus en ce que le volant d'inertie 33 est remplacé par un volant d'inertie adaptatif 6, également représenté sur la figure 6, et dont un autre mode de réalisation est représenté sur la figure 7.

En référence plus particulièrement à la figure 6, on peut voir que ce volant d'inertie 6 comprend un moyeu 60, destiné à être monté sur l'arbre 24 de la pièce 22, avec ou sans roue libre, et calé sur le pignon 32, et auquel sont solidarisées deux masselottes 61 mobiles radialement.

Dans ce mode de réalisation, chacune des masselottes consiste en une masse en forme de secteur d'anneau, reliée au moyeu 60 au travers d'une part d'un bras 62 articulé en pivotement sur ce dernier selon un axe parallèle à celui de rotation du volant 6, et d'autre part un moyen élastique de rappel centripète, en l'occurrence un ressort 63, qui permet notamment d'assurer une précontrainte et de maintenir les masselottes 61 dans une position initiale déterminée.

On comprendra que ce volant d'inertie 6 est de rayon variable en fonction de sa vitesse de rotation, plus la vitesse est élevée et plus les masselottes 61 s'écartent du moyeu 60, ce qui permet de modifier la réponse dynamique du dispositif d'amortisseur et ainsi optimiser le mécanisme.

Sur la figure 5, le volant d'inertie adaptatif 6 est utilisé comme limiteur de vitesse en étant disposé concentriquement dans un élément tubulaire 25 solidaire de la pièce 2, et dont le diamètre interne est supérieur à celui du volant d'inertie 6. A partir d'une certaine vitesse de rotation du volant d'inertie 6, les masselottes 61 s'écartent du moyeu 60, et à partir d'une vitesse plus élevée, elles viennent frotter contre la paroi interne 26 de l'élément tubulaire 25, avec pour conséquence le ralentissement du volant d'inertie, du fait de ce ralentissement les masselottes 61 se rapprochent du moyeux et ne frottent plus, cela permet de limiter la vitesse de rotation du volant d'inertie 6.

Le contrôle de la vitesse de rotation du volant d'inertie 6 permet, dans l'adaptation au dispositif amortisseur selon l'invention, de contrôler la vitesse de déploiement de la pièce 1.

La figure 7 montre un autre mode de réalisation du volant d'inertie adaptatif 6, où le bras articulé en pivotement et le moyen élastique de rappel centripète qui rattachent chaque masselotte 61 au moyeu 60, sont remplacés par une seule pièce 64, présentant des caractéristiques de déformabilité. En l'occurrence la pièce 64 qui relie chaque masselotte 61 au moyeu 60, est faite dans un matériau présentant des qualités de ressort, et comporte un coude 65 dont l'angle est susceptible de varier en fonction de la vitesse de rotation du volant d'inertie 6.

Par ailleurs on peut voir sur cette figure 7 que le volant 6 comporte trois masselottes 61, sachant que le nombre peut être variable.

On notera que le dispositif d'amortisseur selon l'invention peut comporter une association de plusieurs des mécanismes décrits précédemment.

Il est ainsi possible de prévoir plusieurs volants d'inertie, adaptatifs ou non, susceptibles d'être utilisés dans des sens de rotation inverses, en étant par exemple montés sur des roues libres de manière à n'être actifs que dans un sens de rotation, et en sorte d'obtenir des réponses différentes en fonction justement du sens de rotation.

Par ailleurs, l'invention est décrite dans le cas particulier d'une application à mouvement de rotation. Il est cependant parfaitement possible de l'appliquer à un mouvement de translation, en y incorporant un mécanisme de transformation de mouvement quelconque, de types, non limitativement, système vis écrou, système pignon crémaillère, système poulie courroie ou pignon chaîne, système bielle manivelle.

## Revendications

1. Dispositif amortisseur destiné à relier deux pièces dont l'une (1) est susceptible, sous l'effet unique d'une poussée initiale temporaire, donnée par un moyen moteur (22), de se mouvoir par rapport à l'autre (2) pour passer d'une position initiale à une position terminale, et où ce dispositif comporte un système mécanique reliant lesdites pièces en mouvement relatif, et qui incorpore un accumulateur d'énergie cinétique (33; 6) conçu apte à être alimenté par ladite poussée initiale, **caractérisé en ce que** cet accumulateur d'énergie cinétique est apte à restituer au moins l'énergie juste nécessaire pour permettre à ladite pièce mobile (1) d'atteindre ladite position terminale.

2. Dispositif amortisseur selon la revendication 1, **caractérisé en ce que** le mouvement relatif consiste en un mouvement de pivotement d'une pièce (1) sur l'autre (2), et le système mécanique comprend d'une part une roue dentée (11) coaxiale à l'axe dudit pivotement, et solidaire fixement de la pièce mobile (1) et conçue apte à être entraînée en rotation lors de la poussée initiale, et d'autre part un volant à inertie (33; 6), qui constitue l'accumulateur cinétique, et qui est lié en rotation, directement ou indirectement, à ladite roue dentée (11).

3. Dispositif amortisseur selon la revendication 2, **caractérisé en ce que** le système mécanique comporte, intercalé en la roue dentée (11) et le volant à inertie (33; 6), un multiplicateur de vitesse (31, 32) à un ou plusieurs étages.

4. Dispositif amortisseur selon la revendication 2 ou la revendication 3, **caractérisé en ce que** le système mécanique comporte, une roue libre (34).

5. Dispositif amortisseur selon l'une quelconque des revendications 2 à 4, **caractérisé en ce que** le système mécanique comporte un cliquet (5) conçu apte à coopérer avec une roue dentée (31), afin d'assurer une fonction de verrouillage.

6. Dispositif amortisseur selon la revendication 5, **caractérisé en ce que** le système mécanique comporte au moins au niveau d'une liaison entre un arbre et une roue dentée, un élément présentant des caractéristiques d'élasticité susceptible, en coopération avec le cliquet (5), d'assurer un verrouillage avec précontrainte.

7. Dispositif amortisseur selon l'une quelconque des revendications 2 à 6, **caractérisé en ce que** le système mécanique comporte un moyen limiteur de couple disposé au niveau du volant à inertie (33; 6).

8. Dispositif amortisseur selon l'une quelconque des revendications 2 à 6, **caractérisé en ce que** le volant d'inertie (6) est de diamètre variable, il comporte à cet effet un moyeu (60) et au moins une masselotte (61) mobile radialement, lesquels sont reliés au travers de moyens de liaison (62; 64) présentant des facultés d'allongement et associés à des moyens (63; 65) élastiques de rappel centripète.

9. Dispositif amortisseur selon la revendications 8, **caractérisé en ce que** le volant d'inertie de diamètre variable (6) est disposé concentriquement dans un élément tubulaire (25) solidaire de la pièce (2) qui porte ledit volant d'inertie (6), et dont le diamètre interne correspond à celui atteint par ledit volant d'inertie (6) à une certaine vitesse de rotation, en sorte qu'au delà de cette vitesse la masselotte (61), ou les masselottes, dudit volant d'inertie (6) vienne frotter contre la paroi interne (26) dudit élément tubulaire (25), en vue de réaliser un freinage.

10. Dispositif amortisseur selon l'une quelconque des revendications 1 à 9, **caractérisé en ce qu'**il comporte plusieurs volants d'inertie (33; 6) susceptibles d'être utilisés dans des sens de rotation inverses, en étant montés sur des roues libres de manière à n'être actifs que dans un sens de rotation, et en sorte d'obtenir des réponses différentes en fonction du sens de rotation transmis.

## Patentansprüche

1. Stossdämpfervorrichtung zum Verbinden von zwei Teilen, von denen der eine (1) in der Lage ist, sich unter der einzigen Wirkung einer zeitweiligen, von einem Motormittel (22) gelieferten Anfangsdruckkraft bezüglich des anderen (2) zu bewegen, um von einer Anfangsposition in eine Endposition zu gelangen, und wobei diese Vorrichtung ein mechanisches System umfasst, das die besagten Teile in Bewegung zu einander verbindet, und das einen kinetischen Energiespeicher (33; 6) umfasst, der geeignet vorgesehen ist, um durch die besagte Anfangsdruckkraft versorgt zu werden, und **dadurch gekennzeichnet, dass** dieser kinetische Energiespeicher in der Lage ist, wenigstens genau diejenige Energie zu liefern, die notwendig ist, um es dem besagten beweglichen Teil (1) zu erlauben, die besagte Endposition zu erreichen.

2. Stossdämpfervorrichtung nach Anspruch 1, **dadurch gekennzeichnet, dass** die gegenseitige Bewegung aus einer Kippbewegung von einem Teil (1) bezüglich des anderen (2) besteht, und dass das mechanische System einerseits ein Zahnrad (11), das koaxial zur Achse der besagten Kippbewegung und fest mit dem beweglichen Teil (1) verbunden und geeignet vorgesehen ist, um während der Anfangsdruckkraft in Drehung angetrieben zu werden, und andererseits ein Schwungrad (33; 6) umfasst, das den kinetischen Energiespeicher bildet und direkt oder indirekt in Drehung mit dem besagten Zahnrad (11) verbunden ist.

3. Stossdämpfervorrichtung nach Anspruch 2, **dadurch gekennzeichnet, dass** das mechanische System ein zwischen dem Zahnrad (11) und dem Schwungrad (33; 6) geschaltetes Ein- oder Mehrstufen-Übersetzungsgetriebe (31, 32) umfasst.

4. Stossdämpfervorrichtung nach Anspruch 2 oder Anspruch 3, **dadurch gekennzeichnet, dass** das mechanische System ein freies Rad (34) umfasst.

5. Stossdämpfervorrichtung nach irgendeinem der Ansprüche 2 bis 4, **dadurch gekennzeichnet, dass** das mechanische System einen Sperrhaken (5) umfasst, der geeignet vorgesehen ist, um mit einem Zahnrad (31) zusammenzuwirken, um eine Verriegelungsfunktion zu sichern.

6. Stossdämpfervorrichtung nach Anspruch 5, **dadurch gekennzeichnet, dass** das mechanische System wenigstens im Bereich einer Verbindung zwischen einem Schaft und einem Zahnrad ein Element umfasst, das Elastizitätsmerkmale aufweist, die geeignet sind, in Zusammenwirkung mit dem Sperrhaken (5) eine Verriegelung mit Vorspannung zu sichern.

7. Stossdämpfervorrichtung nach irgendeinem der Ansprüche 2 bis 6, **dadurch gekennzeichnet, dass** das mechanische System ein Drehmomentbegrenzungsmittel umfasst, das im Bereich des Schwungrads (33; 6) angeordnet ist.

8. Stossdämpfervorrichtung nach irgendeinem der Ansprüche 2 bis 6, **dadurch gekennzeichnet, dass** das Schwungrad (6) einen variierbaren Durchmesser hat, es zu diesem Zweck eine Nabe (60) und wenigstens ein radial bewegliches Fliehgewicht (61) umfasst, die über Verbindungsmittel (62; 64) verbunden sind, welche Verlängerungsmöglichkeiten aufweisen und zentripetalen elastischen Rückstellmitteln (63; 65) zugeordnet sind.

9. Stossdämpfervorrichtung nach Anspruch 8, **dadurch gekennzeichnet, dass** das Schwungrad mit variierbaren Durchmesser (6) konzentrisch innerhalb eines rohrförmigen Elements (25) angeordnet ist, das fest mit demjenigen Teil (2) verbunden ist, das das besagte Schwungrad (6) trägt und dessen Innendurchmesser demjenigen entspricht, der das besagte Schwungrad (6) bei einer gewissen Drehgeschwindigkeit erreicht, sodass das bzw. die Fliehgewichte (61) des besagten Schwungrads (6) gegen die Innenwand (26) des besagten rohrförmigen Elements (25) reiben, um das Bremsen auszuführen.

10. Stossdämpfervorrichtung nach irgendeinem der Ansprüche 1 bis 9, **dadurch gekennzeichnet, dass** sie mehrere Schwungräder (33; 6) umfasst, die geeignet sind, dadurch in entgegengesetzten Drehrichtungen verwendet zu werden, dass sie so auf freien Rädern gelagert sind, dass sie nur in einer Drehrichtung wirksam sind und so dass in Abhängigkeit der übertragenen Drehrichtung unterschiedliche Antworte erhalten werden.

## Claims

1. Shock-absorber device aimed at connecting two parts, one (1) of which is capable, under the sole effect of a temporary initial thrust, provided by a motor means (22), of moving with respect to the other one (2), in order to pass from an initial position into an end position, and wherein this device includes a mechanical system connecting said parts in a relative movement, and which incorporates a kinetic-energy accumulator (33; 6) designed capable of being supplied by said initial thrust, and **characterized in that** this kinetic-energy accumulator is capable of restituting at least the energy exactly necessary for permitting said movable part (1) to reach said end position.

2. Shock-absorber device according to claim 1, **characterized in that** the relative movement consists of a swiveling motion of one part (1) with respect to the other one (2), and that the mechanical system comprises, on the one hand, a toothed wheel (11) coaxial to the axis of said swiveling, and firmly integral with the movable part (1) and designed capable of being driven in rotation during the initial thrust and, on the other hand, an inertia flywheel (33; 6), which constitutes the kinetic accumulator, and which is directly or indirectly connected in rotation to said toothed wheel (11).

3. Shock-absorber device according to claim 2, **characterized in that** the mechanical system includes, intercalated between the toothed wheel (11) and the inertia flywheel (33; 6), a single- or multi-stage step-up gear (31, 32).

4. Shock-absorber device according to claim 2 or claim 3, **characterized in that** the mechanical system includes a free wheel (34).

5. Shock-absorber device according to any of claims 2 to 4, **characterized in that** the mechanical system includes a catch (5) designed capable of cooperating with a toothed wheel (31), in order to ensure a locking function.

6. Shock-absorber device according to claim 5, **characterized in that** the mechanical system includes at least at the level of a connection between a shaft and a toothed wheel, an element having elasticity features likely to ensure, in cooperation with the catch (5), a locking with pre-stress.

7. Shock-absorber device according to any of claims 2 to 6, **characterized in that** the mechanical system includes a torque limiting means arranged at the level of the inertia flywheel (33; 6).

8. Shock-absorber device according to any of claims 2 to 6, **characterized in that** the inertia flywheel (6) has a varying diameter, it includes to this end a hub (60) and at least one radially movable inertia weight (61), which are connected through connecting means (62; 64) having the possibility of extending and associated with centripetal springy restoring means (63; 65).

9. Shock-absorber device according to claim 8, **characterized in that** the inertia flywheel with a varying diameter (6) is arranged concentrically within a tubular element (25) integral with the part (2), which carries said inertia flywheel (6), and the inner diameter of which corresponds to the one reached by said inertia flywheel (6) at a certain speed of rotation, so that beyond this speed the inertia weight (61), or the inertia weights, of said inertia flywheel (6) rub against the inner wall (26) of said tubular element (25), in order to carry out the braking.

10. Shock-absorber device according to any of claims 1 to 9, **characterized in that** it includes several inertia flywheels (33; 6) capable of being used in opposite directions of rotation, by being mounted on free wheels so as to be active only in one direction of rotation, and so as to obtain different responses depending on the transmitted direction of rotation.
